# EUROPEAN PATENT APPLICATION

(11) **EP 4 309 978 A2**
(43) Date of publication of application: **24.01.2024**
(21) Application number: 23212908.0
(22) Date of filing: 16.02.2023
(51) Int. Cl.: B62D 25/18

(54) **MUDGUARD ASSEMBLY PROVIDED WITH FLAP GUARD HAVING QUICK COUPLING/UNCOUPLING MEANS**

(30) Priority: 29.04.2022 IT 202200008651
(62) Divisional of application: 23157043.3
(71) Applicant: DOMAR S.p.A., 70022 Altamura, Bari (IT)
(72) Inventor: LORUSSO, Marica, I-70022 Altamura, BARI (IT); FIORE, Pasquale, I-70022 Altamura, BARI (IT); DENTE, Daniele, I-70022 Altamura, BARI (IT)
(74) Representative: Mitola, Marco

(57) **Abstract**

A mudguard assembly (4) for industrial vehicles, comprising a mudguard (6) in the shape of an arc of a circle and extending between a front end (8) and a rear end (12), with respect to a travel direction of an associable vehicle, a flap guard (16) associated with said rear end (12) of the mudguard (6), by coupling/uncoupling means (20), the flap guard (16) extending along a vertical direction (Y-Y) between an upper end (24), on the side of the rear end (12) of the mudguard (6), and a lower end (28). In a mounting configuration, the rear end (12) of the mudguard (6) and the upper end (24) of the flap guard (16) at least partially and mutually overlap so as to identify an overlapping area (32). Said coupling/uncoupling means 20 are positioned at said overlapping area (32), are reversible, and create a shape and snap connection.

## Description

### FIELD OF APPLICATION

The present invention relates to a mudguard assembly provided with flap guards having quick coupling/uncoupling means.

### BACKGROUND ART

Several solutions exist in the prior art of mudguard assemblies provided with flap guards which are mounted to the wheels of industrial vehicles, such as trucks, lorries, trailers, vans, and the like.

The flap guards are lower legs applied to the mudguards as true extensions thereof, in order to avoid the projection of liquids and stones lifted by the wheel while the vehicle is traveling.

The flap guards are manufactured separately from the mudguards and then applied thereto.

The connections must be robust because the flap guards are made of rubber, PP, PVC, or even other harder blends, are thinner and more flexible than the structure of the mudguards, and like the latter, are subjected to the actions of the weather as well as the mechanical action of bodies (typically stones and mud).

Therefore, in order to ensure the strength of the connections and the integrity of the flap guards over time, the known solutions include a very firm coupling, typically by means of rivets. However, such solutions are inconvenient to apply and require special tools for mounting, thus making them "permanent". Therefore, the removal can occur irreversibly, by shearing the rivets.

Reversibly removable flap guard solutions also exist in the prior art, but they still require the use of special tools and thus are inconvenient to use.

### PRESENTATION OF THE INVENTION

Therefore, the need is felt to solve the drawbacks and limitations mentioned with reference to the prior art.

The need is met by a mudguard assembly according to claim 1.

### DESCRIPTION OF THE DRAWINGS

Further features and advantages of the present invention will be more comprehensible from the following description of preferred embodiments thereof, given by way of non-limiting examples, in which:
figure 1 shows perspective views of an assembly sequence of a mudguard assembly, according to a first embodiment of the present invention;
figure 2 shows perspective views, from different angles, of an elastic band and a flap guard of the mudguard assembly in figure 1;
figure 3 is a perspective view, in an assembled configuration, of a mudguard assembly according to a second embodiment of the present invention;
figure 4 is a perspective view, in an exploded configuration, of the mudguard assembly in figure 3;
figures 5-6 show enlarged details of exploded components of the mudguard assembly in figure 3;
figure 7 is a perspective view, in an assembled configuration, of a mudguard assembly according to a third embodiment of the present invention;
figure 8 is a perspective view, in an exploded configuration, of the mudguard assembly in figure 7;
figures 9-10 show perspective views of components of the mudguard assembly in figure 7.

The elements or parts of elements common to the embodiments described below will be indicated using the same reference numerals.

### DETAILED DESCRIPTION

With reference to the aforementioned figures, reference numeral 4 indicates a mudguard assembly for industrial vehicles as a whole.

As mentioned, the meaning of industrial vehicle should be understood in a broad sense, comprising, by way of mere example, trucks, lorries, trailers, vans, and the like.

A mudguard assembly 4 comprises a mudguard 6 in the shape of an arc of a circle and extending between a front end 8 and a rear end 12, with respect to a travel direction of an associable vehicle. For the purposes of the present invention, the mudguard 6 can have any shape, size and can be made of any material, preferably plastic material.

The mudguard assembly 4 further comprises a flap guard 16 associated with said rear end 12 of the mudguard 6 by coupling/uncoupling means 20.

For example, the coupling/uncoupling means 20 are made of plastic material.

The flap guard 16 extends along a vertical direction Y-Y between an upper end 24, arranged on the side of the rear end 12 of the mudguard 6, and a free lower end 28 facing the ground. The mudguard 16 thus is a leg or extension of the mudguard 6 on the side of the rear end 12 of the latter.

According to a possible embodiment of the present invention, the flap guard 16, at said upper end 24, is curved and counter-shaped with respect to the rear end 12 of the mudguard 6.

The flap guard 16 can also be straight in shape so as to be substantially tangent to the rear end 12 of the mudguard 6.

In a mounting configuration, the rear end 12 of the mudguard 6 and the upper end 24 of the flap guard 16 at least partially and mutually overlap so as to identify an overlapping area 32. At said overlap area 32, the rear end 12 of the mudguard 6 and the upper end 24 of the flap guard 16 are in mutual contact and mechanically connected by the coupling/uncoupling means 20.

In particular, said coupling/uncoupling means 20 are positioned at said overlapping area 32.

Advantageously, said coupling/uncoupling means 20 are reversible and create a shape and snap connection, as better described below.

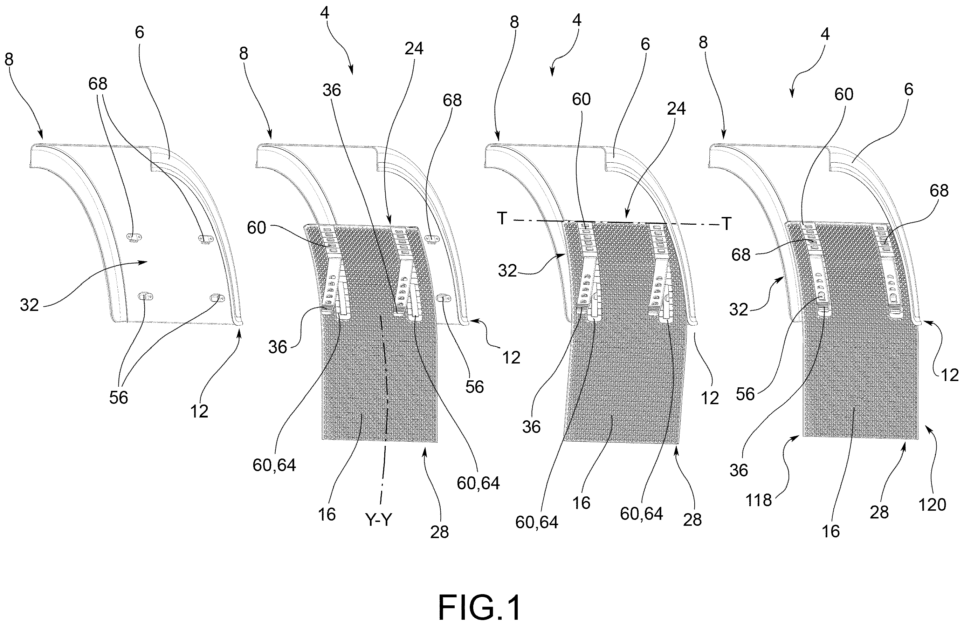

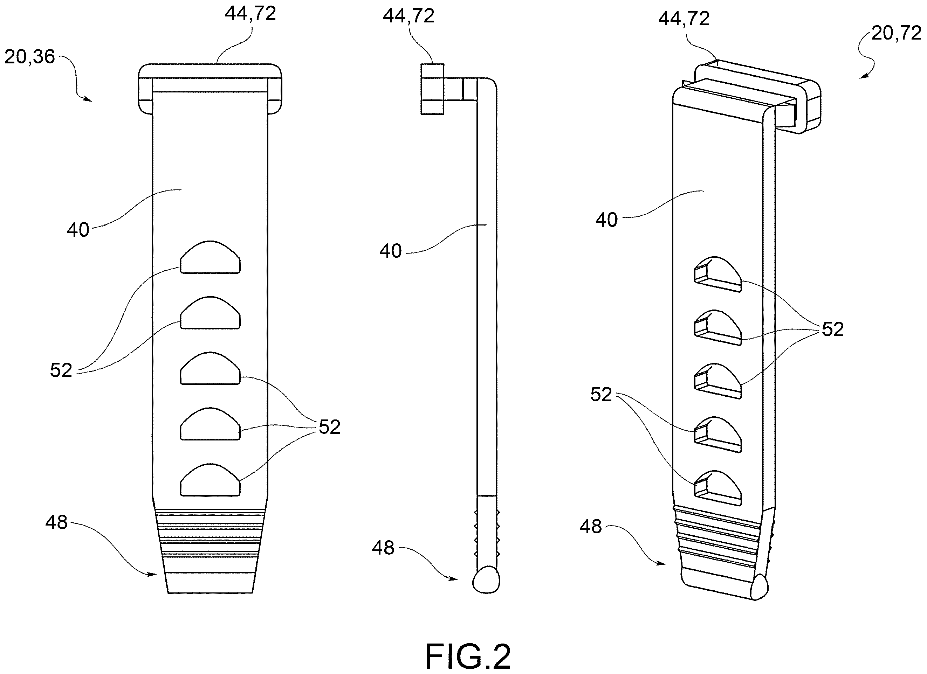

According to a possible embodiment (figures 1-2), said coupling/uncoupling means 20 comprise at least one elastic band 36 having a body 40 extending from a fixed end 44 to a free end 48.

The fixed end 44 is fixed to the mudguard 6, the free end 48 is provided with a plurality of slots 52 adapted to be coupled to corresponding end hooks 56 of the mudguard 6.

The end hooks 56 are preferably made of metal; said end hooks 56 are fixed in a cantilevered manner with respect to the mudguard 6 on the side facing the associable vehicle wheel.

The body 40 of the elastic band 36 is inserted into at least one position hole 60 obtained in the flap guard 16.

According to a possible embodiment, the mudguard 16 comprises a plurality of position holes 60; the position of the mudguard 16 can thus be adjusted at will with respect to the rear end 12 of the mudguard 6. In other words, the width of said overlapping area 32 can thus be changed.

The body 40 of the elastic band 36 is inserted into at least two position holes 60 obtained on the flap guard 16.

According to a possible embodiment, at least one of said position holes 60 is a slotted hole 64 shaped so as to allow the passage of at least one of said end hooks 56 of the mudguard 6.

Preferably, at least one of said position holes 60 is locked on a corresponding intermediate hook 68 of the mudguard 6. The fixing of the mudguard 16 on the mudguard 6 is thus more stable.

According to a possible embodiment, the fixed end 44 of the elastic band 36 is fixed to the mudguard 6 by a shape coupling between a fixing head 72 of the elastic band 36 and a corresponding hole on the mudguard 6.

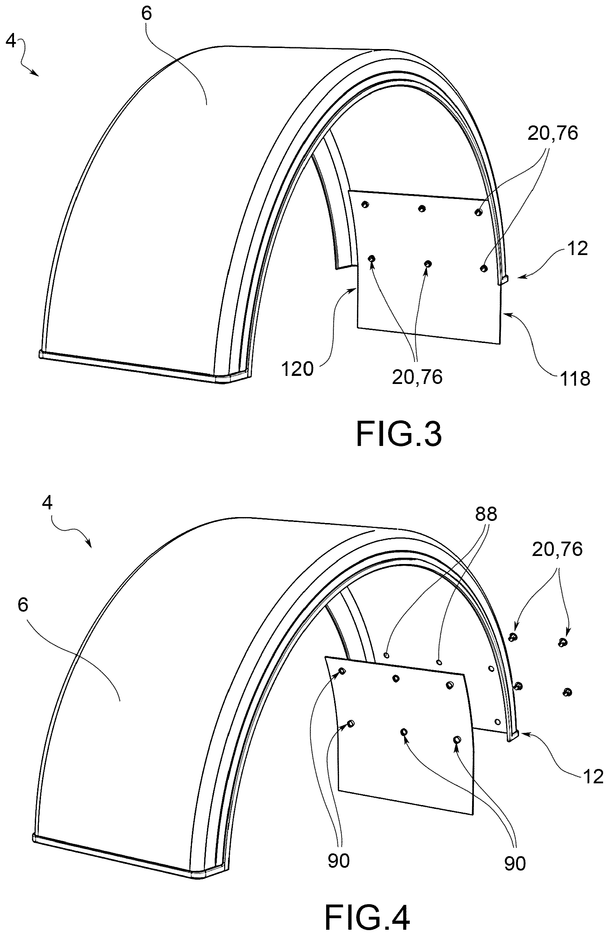

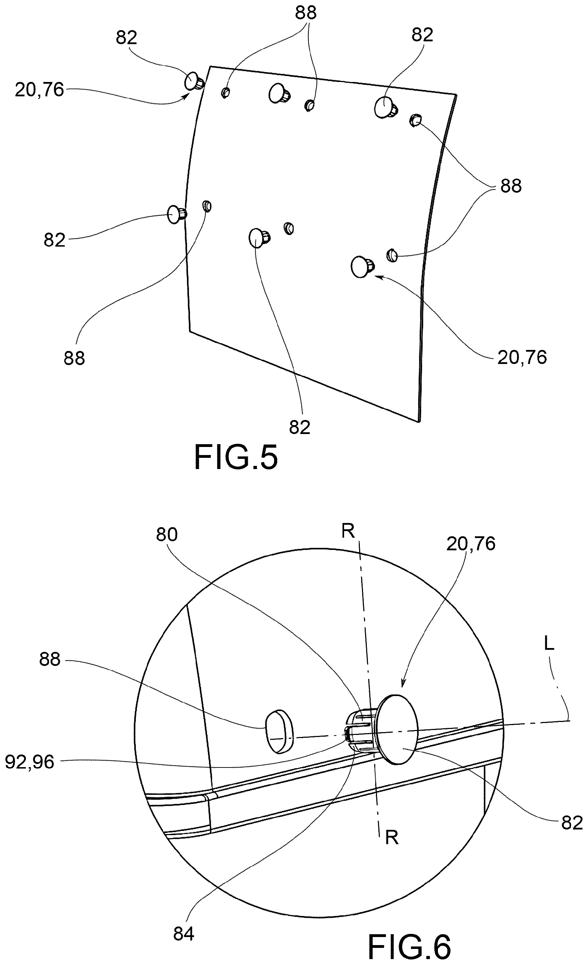

According to a possible embodiment (figures 3-6), said coupling/uncoupling means 20 comprise a clip 76 having a cylindrical body 80 delimited by a stop head 82 and an insertion head 84 opposing each other along a longitudinal axis L-L of the cylindrical body 80. Said stop heads 82 and insertion head 84 protrude with respect to the cylindrical body 80 so as to create a pair of undercuts.

The cylindrical body 80 can have different geometries. According to a possible embodiment, the cylindrical body 80, with respect to a section plane perpendicular to the longitudinal axis L-L, has a circular cross-section. It is also possible to provide polygonal or in any case non-circular geometries.

The cylindrical body 80 passes through fixing holes 88 on the rear end 12 of the mudguard 6 and on the upper end 24 of the flap guard 16, respectively. The rear end 12 of the mudguard 6 and the upper end 24 of flap guard 16, in a mounting configuration, are thus compressed between the stop head 82 and the insertion head 84 of the clip 76.

The coupling/uncoupling means 20 further comprise a locking ring 90 snap inserted at said insertion head 84 so as to prevent the insertion head 84 from exiting from the corresponding fixing hole 88.

According to a possible embodiment, the insertion head 84 comprises at least one inlet flaring 92 in said fixing hole 88 and the locking ring 90 is positioned between the inlet flaring 92 and the stop head 82.

According to a possible embodiment, said inlet flaring 92 is positioned on a radially flexible elastic flap 96, along a radial direction R-R perpendicular to and incident with said longitudinal axis L-L of the cylindrical body 80.

Preferably, the insertion head 84 comprises two inlet flarings 92 arranged on corresponding radially flexible, mutually opposite elastic flaps 96.

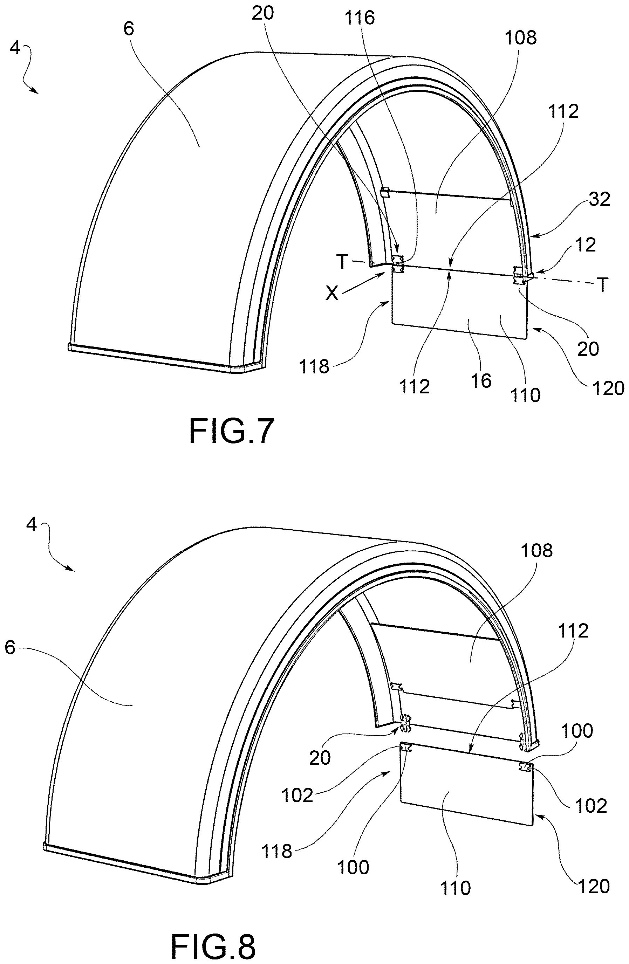

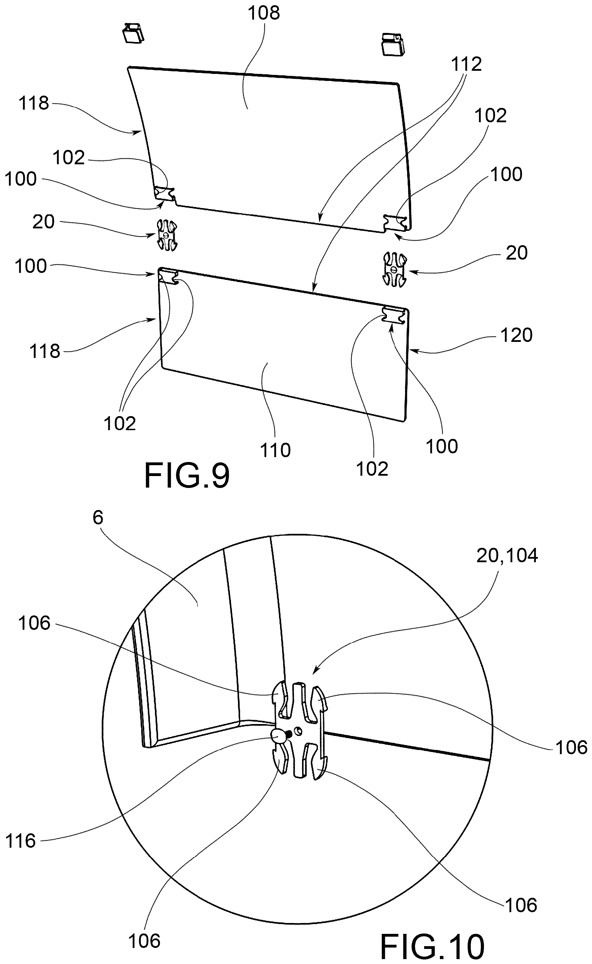

According to a further possible embodiment (figures 7-10), said coupling/uncoupling means 20 comprise a pair of cantilevered seats 100 provided with recesses 102, being contiguous and facing each other, and at least one buckle 104 housed straddling between said contiguous cantilevered seats 100. The buckle 104 has elastic flaps 106 adapted to snap into said recesses 102.

According to a possible embodiment, said cantilevered seats 100 are positioned on the rear end 12 of the mudguard 6 and on the upper end 24 of the flap guard 16, respectively.

According to a possible embodiment, the flap guard 16 is divided into two parts, a first part 108 fixed to the mudguard 6 and a second cantilevered part 110; said cantilevered seats 100 are positioned on mutually facing inner ends 112 of said first and second parts 108,110, respectively.

Preferably, said buckle 104 is fixed to mudguard 6 by means of a 116 pin.

According to a possible embodiment, said coupling/uncoupling means 20 are positioned at two opposite transverse ends 118,120 of said overlapping area 32, along a transverse direction T-T, perpendicular to said vertical direction Y-Y.

Finally, it is worth noting that the flap guard 16 can be made of rubber, PP, PVC, or even other harder blends.

As can be appreciated from the description above, the present invention allows overcoming the drawbacks presented in the prior art.

In particular, the present invention allows coupling and uncoupling the flap guard quickly to/from the mudguard, without the need for any tools.

This coupling and uncoupling operation can be repeated because it is completely reversible; indeed, it does not require any breakage or replacement of the coupling/uncoupling means.

At the same time, the coupling/uncoupling means according to the invention are robust and reliable over time.

In particular, the coupling/uncoupling means are not compromised by shocks and vibrations, nor by the action of weather, stones or mud, and the like.

By virtue of the present invention, the flap guards can be removed and reassembled, even for replacement needs, quickly and without the use of tools.

In order to meet contingent, specific needs, those skilled in the art can make several changes and variations to the solutions described above.

The scope of protection of the invention is defined by the following claims.

## Claims

1. Mudguard assembly (4) for industrial vehicles, comprising:
- a mudguard (6) in the shape of an arc of a circle and extending between a front end (8) and a rear end (12), with respect to a direction of an associable vehicle,
- a flap guard (16) associated with said rear end (12) of the mudguard (6), by coupling/uncoupling means (20), the flap guard (16) extending along a vertical direction (Y-Y) between an upper end (24), from the side of the rear end (12) of the mudguard (6), and a lower end (28), **characterized in that**
- in a mounting configuration, the rear end (12) of the mudguard (6) and the upper end (24) of the flap guard (16) are at least partially overlapping each other so as to identify an overlapping area (32),
- said coupling/uncoupling means (20) are positioned at said overlapping area (32),
- said coupling/uncoupling means (20) are reversible and create a shape and snap connection,
wherein said coupling/uncoupling means (20) comprise at least one elastic band (36), having a body (40) extending from a fixed end (44) to a free end (48), the fixed end (44) being fixed to the mudguard (6), the free end (48) being provided with a plurality of slots (52) adapted for hooking on corresponding end hooks (56) of the mudguard (6), the body (40) of the elastic band (36) being inserted in at least one position hole (60) obtained on the flap guard (16).

2. Mudguard assembly (4) for industrial vehicles according to claim 1, wherein the flap guard (16) comprises a plurality of position holes (60).

3. Mudguard assembly (4) for industrial vehicles according to claim 2, wherein the body (40) of the elastic band (36) is inserted in at least two position holes (60) obtained on the flap guard (16).

4. Mudguard assembly (4) for industrial vehicles according to claim 2 or 3, wherein at least one of said position holes (60) is a slotted hole (64) shaped so as to allow the passage of at least one of said end hooks (56) of the mudguard (6).

5. Mudguard assembly (4) for industrial vehicles according to claim 2, 3, or 4, wherein at least one of said position holes (60) is locked on a corresponding intermediate hook (68) of the mudguard (6).

6. Mudguard assembly (4) for industrial vehicles according to any one of claims 1 to 5, wherein the fixed end (44) is fixed to the mudguard (6) by a shape coupling between a fixing head (72) of the elastic band (36) and a corresponding hole on the mudguard (6).
